# EUROPEAN PATENT APPLICATION

(11) **EP 3 785 531 A1**
(43) Date of publication of application: **03.03.2021**
(21) Application number: 20191272.2
(22) Date of filing: 17.08.2020
(51) Int. Cl.: A01K 1/00, F24F 12/00, A01K 31/20

(54) **LIVESTOCK CENTRAL AIR CONDITIONER AND LIVESTOCK HOUSE**

(30) Priority: 26.08.2019 CN 201910790890
(71) Applicant: Cheng, Yuanhu, Tianmen, Hubei 431700 (CN)
(72) Inventor: Cheng, Yuanhu, Tianmen, Hubei 431700 (CN)
(74) Representative: Lorente Berges, Ana

(57) **Abstract**

A livestock central air conditioner and a livestock house, relates to the art field of livestock house and equipment. The livestock central air conditioner including a heat exchange unit 1, a cooling component 2, an axial fan 3 and an air duct 4; the livestock house including a house 6 and the livestock central air conditioner; an ventilation fan 63 is provided at the location of the exhaust outlet 62 on the house 6. The application is for solving the problem of unstable inner house temperature in the conventional art.

## Description

### Technical Field

The present application relates to the technical field of livestock house and equipment, specifically relates to a livestock central air conditioner and livestock house.

### Background art

Currently, pigs, chickens, and other livestock are mostly kept in closed houses. For ensuring the fresh air required by livestock and exhausting waste gas and dust, the conventional art generally adopts the negative pressure ventilation mode. Ventilation fans are arranged at one end of the house to exhaust waste gas and dust. While exhausting, negative pressure is generated in the house, and air inlets are provided on the other end and sidewall, and the air inlets are equipped with cooling pad, which can be used for cooling the incoming air in summer. Due to the negative pressure in the house, fresh air is inhaled into the house from the air inlets to supplement the fresh air required by livestock.

The comfort temperature required by the livestock is in the range of 15-30°C, and the most suitable temperature is 18-20°C. In the high temperature period of summer, need to use cooling pad for cooling the incoming air. Its principle is to wet the cooling pad with water, and then when the air passing through the cooling pad, due to the evaporative cooling effect, the water content in the air increasing, and the air temperature dropping, so as to achieve the effect of decreasing the inner house temperature. When the outside temperature is 38°C and the relative humidity is around 50%, the inner house temperature can be decreased to around 30°C. This mode greatly improved the stocking density and production performance of the livestock. However, in case ofhigh temperature and high humidity in summer, the water content of the outdoor air is already very high, resulting the evaporative cooling effect of the cooling pad lowered to a very low level, or even completely ineffective. Similarly, the outside temperature is 38°C, when the humidity reaches 80-90%, the inner house temperature can only be decreased to about 35°C, so that the livestock in the house are completely in a high temperature and high humidity environment, not only the production performance greatly affected, but also will causing the death of livestock, causing great economic losses.

### Contents of the Invention

Therefore, the embodiments of the invention provide a livestock central air conditioner and a livestock house, to solve the problem of unstable inner house temperature of the conventional art. For achieving the above purpose, the embodiments of the invention provide the following technical solutions:
According to the first aspect of the embodiments of the invention, the livestock central air conditioner including a heat exchange unit, a cooling component, an axial fan, and air ducts, the wind passes through the heat exchange unit, the cooling component, the axial fan and the air ducts successively; the heat exchange unit including a heat exchanger, a heat exchange circulating tube connecting with the heat exchanger, and a first water pump connecting to the heat exchange circulating tube; a section of the heat exchange circulating tube is a heating or cooling section, heat transfer fluid is filled in the heat exchange circulating tube.

Further, the heat exchanger including a box, a certain number of heat exchange tubes provided in the box, the heat exchange tubes are connected in sequence, and the heat exchange tubes are arranged in the box to form a heat exchange surface; a connecting tube is provided at the outside of the box and connecting with the heat exchange tubes, and the connecting tube connecting with the heat exchange circulating tube; the wind blows into the heat exchange surface from the side away from the cooling pad, and blows out from the side close to the cooling pad.

Further, the cooling component including cooling pad, water supply pips provided around the cooling pad, water outlets are opened on the water supply pipes for spraying water to the cooling pad, a second water pump is provided on the water supply pipes; a wind hood connecting the cooling pad and the axial fan is provided between the cooling pad and the axial fan.

Further, the thickness of the cooling pad is between 30-50cm.

Further, the air duct including main air duct connecting with the axial fan, and a certain number of branch air ducts provided on the main air duct, air outlets are opened at the end of the branch air ducts where away from the main air duct.

Further, a geothermal well is provided under the ground, and the heating or cooling section of the heat exchange circulating tube is located within a specific depth of the geothermal well.

Further, a heat source or cold source is provided at the heating or cooling section of the heat exchange circulating tube, the heat source or cold source will heating or cooling the heating or cooling section of the heat exchange circulating tube.

Further, the heating or cooling section of the heat exchange circulating tube is located at the constant temperature zone of subsurface, 50-100m under the ground.

According to the second aspect of embodiments of the invention, provided a livestock house, including a house and the livestock central air conditioner, air inlets are provided on one side of the house, the heat exchange unit is located at the air inlets, the cooling component, the axial fan, and the air ducts are provided inside of the house successively, where close to the heat exchange unit; exhaust outlets are provided on the sidewall of the house.

Further, ventilation fans for exhausting are provided on the house and located at the exhaust outlets.

The embodiments of the invention contain the following advantages:
By the provided heat exchange unit and cooling component in the embodiments of the present application, in summer, the heat exchange unit using year-round stable geothermal resource as a cooling source, the air is cooled while the air passing through the heat exchange unit, and meanwhile, the moisture in the air condensed, dehumidify the air to a certain extent. When the air arriving at the location of the cooling component, the provided cooling pad cooling the air for the second time, by using the evaporative cooling effect. This greatly improves the comfort level of the livestock, while reduces the risk of livestock death from heat stress, greatly improves production performance.

When livestock producing in winter, the heat exchange unit using year-round stable geothermal resource as a heating source, the air is heated while the air passing through the heat exchange unit, so that the air remains highertemperature to enter the livestock house, so that the inner house temperature maintains constant all year round.

### Description of the drawings

For explaining the embodiments of the invention or the conventional art solutions more clearly, the drawings for explaining the embodiments or the conventional art will be briefly described as below. It is obvious that the drawings in the following descriptions are merely exemplary, and for those skilled in the art can obtain other embodiment drawings without any creative work according to the drawings provided.

The structure, the proportions, the sizes, and the like in the specifications are only used to match the contents disclosed in the specifications, for understanding and reading by those skilled in the art, not the restrictions for limiting the implementing of the invention, so it doesn't have technical substantive meaning. Any modification of the structure, the changes of the proportional relation or the adjustment of the sizes, while don't influence the effect and purpose which can be achieved by the invention, all should be fallen in the scope of the technical content disclosed by the invention.
FIG. 1 is a schematic overall structural view of the livestock house provided by the embodiments of the invention;
FIG. 2 is a schematic view for highlighting the heat exchange unit in the livestock house provided by the embodiments of the invention.

Legend: 1, heat exchange unit; 11, heat exchanger; 111, box; 112, air intake; 113, heat exchange tube; 114, connecting tube; 12, heat exchange circulating tube; 13, first water pump; 2, cooling component; 21, cooling pad; 22, water supply pipe; 23, second water pump; 3, axial fan; 31, wind hood; 4, airduct; 41, main air duct; 42, branch air duct; 5, geothermal well; 6, house; 61, air inlet; 62, exhaust outlet; 63, ventilation fan.

### Preferred Embodiments

The implementation of the invention is described in detail with the specific embodiments as below, those skilled in the art can realize other advantages and functions readily from the disclosure. It is obvious that the described embodiments are part of the embodiments of the invention, but not all the embodiments. All other embodiments obtained base on the embodiments of the invention without creative effort by those skilled in the art, are contained in the scope of the invention.

### Preferred Embodiment 1

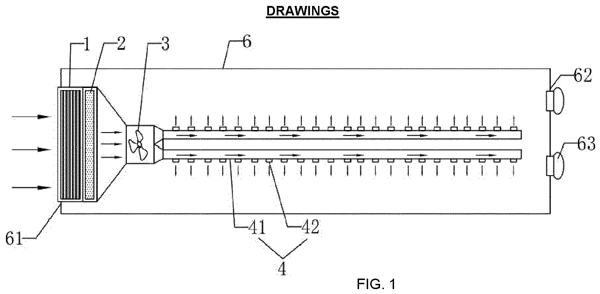

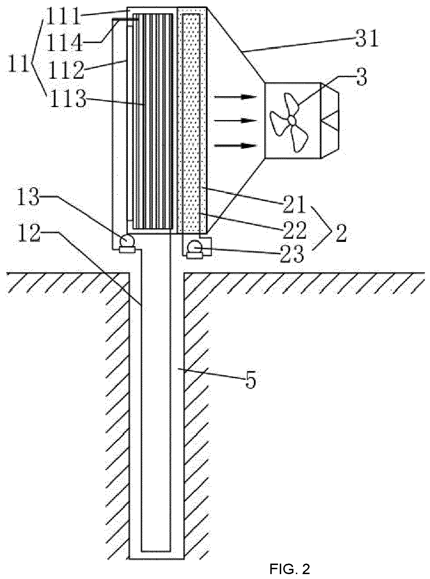

A livestock central air conditioner, as shown in FIG. 1 and FIG. 2, including a heat exchange unit 1, a cooling component 2, an axial fan 3, and air ducts 4, the air passes through the heat exchange unit 1, the cooling component 2, the axial fan 3 and the air ducts 4 successively; when in use, the air is blown to the air duct 4 by the axial fan 3, and meanwhile, negative pressure is generated on the side of the axial fan 3, where close to the cooling component 2, so that the outside air is able to pass through the heat exchange unit 1 and the cooling component 2 and enter the axial fan 3, and the air will be cooled or heated while passing through the heat exchange unit 1 and the cooling component 2.

The heat exchange unit 1 including a heat exchanger 11, a heat exchange circulating tube 12 connecting with the heat exchanger 11, a first water pump 13 connecting to the heat exchange circulating tube 12; when in use, the water is pumped into the heat exchange circulating tube 12 by the first water pump 13, exchange heat in the heat exchanger 11 with the air. A section of the heat exchange circulating tube 12 is a heating or cooling section, and the heat exchange circulating tube 12 is filled with heat transfer fluid. When in use, by heating or cooling the heating or cooling section, the heat transfer fluid is heated or cooled, and then heating or cooling the wind while flowing through the heat exchanger 11.

In the embodiment, the heat exchanger 11 is selected to use a finned tube heat exchanger, but it is not limited to be finned tube exchanger, but also might be a harmonica type exchanger or other exchangers capable of achieving heat exchange.

The heat exchanger 11 including a box 111, an through hole air intake 112 on the box 111, a certain number of heat exchange tubes 113 are provided in the box 111, the heat exchange tubes 113 are connected in sequence, the heat exchange tubes 113 are arranged in the box 111 to form a heat exchange surface, and the heat exchange surface is perpendicular to the wind flowing direction of the air intake 112. A connecting tube 114 which connecting with heat exchange tube 113 is provided at the outside of the box 111. The connecting tube 114 connecting with the heat exchange circulating tube 12; the air is blown into the heat exchange surface from the side away from the cooling pad 21, blown out from the other side, heat exchange is performed while passing through the heat exchange tube 113. When in use, heating or cooling the air quickly and stably by the provided heat exchanger 11.

Heat source or cold source is provided at the heating or cooling section of the heat exchange circulating tube 12, the heat or cool source heating or cooling the heating or cooling section. The heat source can be electric heating or water bath heating. The cold source can be refrigerating machine or the like. The heat source or the cold source may be the above-mentioned methods or other methods, which are not listed here one by one.

Preferably, a geothermal well 5 is provided under the ground, and the heating or cooling section of the heat exchange circulating tube 12 is located within a specific depth of the geothermal well 5. The heating or cooling section of the heat exchange circulating tube 12 is located at the constant temperature zone of subsurface, 50-100m under the ground. In summer, the outside temperature is high and the temperature of the soil in the constant temperature zone of subsurface is low. The heat exchange circulating tube 12 exchange heat with the soil in the constant temperature zone of subsurface, so that the heat transfer fluid inside the heat exchange circulating tube 12 exchange heat, and the heat transfer fluid inside is cooled down. In winter, the outside temperature is low, the soil temperature in the constant temperature zone of subsurface is higher, and the temperature of the heat transfer fluid is risen due to the heat exchange, and heating the wind at the heat exchanger 11.

The heat transfer fluid can be liquid water. In the process of cooling the air by the heat exchanger 11 in summer, the condensing effect will be achieved, so that the moisture in the air condensed at this location, so as to achieve the effect of dehumidifying the air. Thus, the humidity declined after the air passed through the heat exchanger 11.

The cooling component 2 including cooling pad 21, water supply pipes 22 provided around the cooling pad 21, water outlets for spraying water to the cooling pad 21 are opened on the water supply pipes 22, and a second water pump 23 is provided on the water supply pipes 22; in summer, the second water pump 23 pumping water onto the cooling pad 21 to keep the cooling pad 21 wet. After the air passed through the cooling pad 21, be further cooled down while the water evaporating.

The thickness of the cooling pad 21 is set between 30-50cm. By thickening the thickness of the cooling pad 21, when in use, when the air flowing through the cooling pad 21, the evaporative cooling effect of the cooling pad 21 increased, and meanwhile, the water storage of the cooling pad 21 increased, so the action time is greatly extended.

A wind hood 31 connecting the cooling pad 21 and the axial fan 3 is provided between the cooling pad 21 and the axial fan 3. When in use, the axial fan 3 generates negative pressure inside the wind hood 31 during the air supply processing, so that outside wind can pass through the heat exchanger 11 and the cooling pad 21.

After the air passed through the axial fan 3, the wind entering the air duct 4, and then the livestock house will be cooled. The air duct 4 including main air duct 41 connecting to the axial fan 3, a certain number of branch air ducts 42 provided on the main air duct 41. Air outlets are opened at the end of the branch air ducts 42, where away from the main air duct 41. The distance between two adjacent air outlets can be 2-4m. by the plurality of the branch air ducts 42 provided, so that the wind is able to enter the interior of the livestock house quickly and evenly, so that cooled down quickly and evenly.

### Preferred Embodiment 2

A livestock house, as shown in FIG. 1 and FIG.2, including a house 6, and the livestock central air conditioner in the embodiment 1.

An air inlet 61 is opened on one side of the house 6, the heat exchange unit 1 is provided at the location of the air inlet 61, the cooling component 2, the axial fan 3, and the air duct 4 are provided inside of the house 6 successively and close to the heat exchange unit 1; when in use, the outside air passes through the heat exchange unit 1, the cooling component 2, the axial fan 3, and the air duct 4 successively.

Exhaust outlets 62 are provided on the side wall of the house 6, and the exhaust outlets 62 may be located on the vertical wall or on the roof, which is not limited herein. When in use, cold wind entering the house 6 from the air duct 4, so that the air pressure is generated inside the house 6, the hot air in the house 6 is exhausted from the exhaust outlets 62.

Ventilation fans 63 for exhausting air to the outside are provided at the location of exhaust outlets 62 on the house 6. The ventilating fans 63 accelerate the exhaust effect.

While working in summer, preliminary cooling is performed by the provided heat exchange unit 1, and then a secondary cooling is achieved by the cooling component 2, and then the cooled air is blown into the house 6 by the axial fan 3.

The heat exchange unit 1 using the year-round stable geothermal resource as a cooling source. The water in the heat exchange circulating tube 12 which buried to the depth of 50-100 meters underground, exchanges heat with the low-temperature underground soil from the tube wall and change to 17-20°C, the cold water is pumped into the heat exchanger 11. When the outside high-temperature air passing through the heat exchanger 11, exchanging heat with the heat exchanger 11, the high-temperature air changed into low-temperature air, and be blown into the air duct 4 in the house 6 by the action of the axial fan 3, and then be blown into the house 6 from the air outlets, and mixed with the air inside the house 6. Meanwhile, due to the condensing effect of the low-temperature heat exchanger 11, the relative moisture of the air which passed through the heat exchanger 11 is also reduced. After the temperature of the water which flows through the heat exchanger 11 rose, it is pumped into the underground heat exchange circulating tube 12, and then exchanging heat with the soil through the heat exchange circulating tube 12 to become cold water, and then be pumped into the heat exchanger 11, such a circulation will keeping the water temperature in the heat exchanger 11 stable at 17-20°C for a long time, so as to achieve the requirement of continuous cooling.

As the outside temperature continues rising, the heat absorbed by the heat exchanger 11 alone is insufficient for cooling the air entering the house 6 to the ideal temperature, resulting the temperature rising in the house 6, and the comfort level of the livestock lowering. At this moment, the cooling component 2 is turned on, and the temperature being decreased by utilizing evaporative cooling effect of the cooling pad 21. Greatly improve the comfort level of livestock, reduce the risk of livestock death from heat stress, and greatly improve production performance.

When livestock producing in winter, the year-round stable geothermal resource is used as a heating source. The water in the heat exchange circulating tube 12 which buried to the depth of 50-100 meters underground, exchange heat with the underground warm soil from the tube wall, and becoming warm water of 17- 20°C, be pumped into the heat exchanger 11 of the heat exchange unit 1. When the outside low-temperature air passing through the heat exchanger 11, the air exchanges heat with the heat exchanger 11, and the low-temperature air changed into warm air. By the action of the axial fan 3, it enters the air duct 4, and then be blown into the house 6 through the air outlets, mixing with the air in the house 6. After the temperature of the water which flowing through the heat exchanger 11 dropped, it is pumped into the underground heat exchange circulating tube 12, and then exchanges heat with the soil through the heat exchange circulating tube 12, to become warm water, which is then pumped into the heat exchanger 11, such a circulation will always keeping the water temperature in the heat exchanger 11 stable at 17-20°C, so as to achieve the requirement of constant temperature.

The application blows preheating or cooled fresh air directly into the house 6 at a specific air speed, through the air outlets every 2-4 meters of the central air conditioner, so that livestock in different area of the whole house 6 are simultaneously obtained the fresh air with suitable temperature, ensures different area keep the same level of temperature, so that the temperature in the livestock house is suitable, which will improving the comfort level of livestock, and improving the production performance of livestock.

Secondly, the application uses the year-round stable geothermal resources as heating source or cooling source, without the requirement of additional electrical energy or natural gas for heating or cooling, which achieves the effect of energy saving and emission reduction, and can also reduce the operating cost of livestock house.

The using of circulating water as a heat exchange medium does not require additional exploitation of groundwater resources. Meanwhile, comparing with the traditional negative pressure ventilation mode, the electrical energy consumption is also greatly lowered. In winter, energy consumption will be lowered by more than 10%, and summer energy consumption will be lowered by 30-40%, so that to achieve the effect of energy saving and emission reduction.

Although the invention has been described in detail above with general description and specific embodiments, but base on the invention, some modifications or improvements can be made, it is obvious to those skilled in the art field. Therefore, these modifications or improvements base on without departing from the spirit of the invention should be covered in the protection scope of the invention.

## Claims

1. A livestock central air conditioner comprising: a heat exchange unit 1, a cooling component 2, an axial fan 3, and an air duct 4 ; the air passing through the heat exchange unit 1, the cooling component 2, the axial fan 3 and the air duct 4 successively; a wind hood 31 connecting a cooling pad 21 and the axial fan 3 is provided between the cooling pad 21 and the axial fan 3; the air duct 4 comprising a main air duct 41 connecting to the axial fan 3, a certain number of the branch air ducts 42 provided on the main air duct 41, and an air outlet opened at the end of the branch air duct 42 where away from the main air duct 41; the air blowing into a heat exchange surface of a heat exchanger 11 of the heat exchange unit 1, from the side away from the cooling pad 21, blowing out of the heat exchanger 11, from the side close to the cooling pad 21, and then blowing into the cooling pad 21, from the side away from the axial fan 3, blowing out of the cooling pad 21, from the side close to the axial fan 3, and then blowing into the wind hood 31, passing through the axial fan 3 and blowing into the main air duct 41 of the air duct 4, blowing into the branch air ducts 42, blowing out from the air outlets on the branch air ducts 42.

2. The livestock central air conditioner as claimed in claim 1, the heat exchange unit 1 comprising the heat exchanger 11, a heat exchange circulating tube 12, which connecting with the heat exchanger 11, and a first water pump 13 connecting to the heat exchange circulating tube 12; a section of the heat exchange circulating tube 12 is a heating or cooling section, and the heat exchange circulating tube 12 is filled with heat transfer fluid; the heat exchanger 11 comprising a box 111, a certain number of heat exchange tubes 113 provided in the box 111, the heat exchange tubes 113 are connected in sequence, the heat exchange tubes 113 are arranged in the box 111 to form a heat exchange surface, a connecting tube 114 connecting with the heat exchange tubes 113 is provided at the outside of the box 111, the connecting tube 114 connecting with the heat exchange circulating tube 12; the wind blowing into the heat exchange surface from the side away from the cooling pad 21, and blowing out from the side close to the cooling pad 21.

3. The livestock central air conditioner as claimed in claim 1, the cooling component 2 comprising the cooling pad 21, a water supply pipe 22 provided around the cooling pad 21, a certain number of water outlets on the water supply pipes 22 for spraying water mist onto the cooling pad 21, and a second water pump 23 provided on the water supply pipes 22.

4. The livestock central air conditioner as claimed in claim 3, the thickness of the cooling pad 21 is between 30-50 cm.

5. The livestock central air conditioner as claimed in claim 1, a geothermal well 5 is provided under the ground, and a heating or cooling section of a heat exchange circulating tube 12 is located within a specific depth of the geothermal well 5.

6. The livestock central air conditioner as claimed in claim 1, a heat or cold source is provided at heating or cooling tube section of a heat exchange circulating tube 12, and the heating or cooling section heating or cooling by the heat or cold source.

7. The livestock central air conditioner as claimed in claim 5, the heating or cooling tube section of the heat exchange circulating tube 12 is located at the constant temperature zone of subsurface, 50-100m under the ground.

8. A livestock house comprising a house 6, and a livestock central air conditioner as claimed in claim 1; the house 6 comprising an air inlet 61 provided on one side of the house 6, a heat exchange unit 1 provided at the location of the air inlet 61, a cooling component 2, an axial fan 3, and an air duct 4 are provided inside the house 6 successively where close to the heat exchange unit 1; an exhaust outlet 62 provided on the side of the house 6.

9. The livestock house 6 as claimed in claim 8, a ventilation fan 63 for exhausting is provided on the house 6 and located at the exhaust outlet 62.
